# EUROPÄISCHE PATENTSCHRIFT

(11) **EP 1 738 428 B1**
(45) Veröffentlichungstag und Bekanntmachung des Hinweises auf die Patenterteilung: **23.01.2008**
(21) Anmeldenummer: 05737956.2
(22) Anmeldetag: 16.03.2005
(51) Int. Cl.: H01M 8/02

(54) **ELEKTRISCH LEITFÄHIGER STAHL-KERAMIK-VERBUND SOWIE DESSEN HERSTELLUNG**
ELECTRICALLY CONDUCTIVE STEEL-CERAMIC CONNECTION AND METHOD FOR THE PRODUCTION THEREOF
LIAISON CERAMIQUE-ACIER ELECTROCONDUCTRICE ET PROCEDE DE PRODUCTION ASSOCIE

(30) Priorität: 20.03.2004 DE 102004013791
(43) Veröffentlichungstag der Anmeldung: 03.01.2007
(73) Patentinhaber: Forschungszentrum Jülich GmbH, 52425 Jülich (DE); Topsøe Fuel Cell A/S, 2800 Kongens Lyngby (DK); Energieonderzoek Centrum Nederland, 1755 ZG Petten (NL)
(72) Erfinder: LAATSCH, Joachim, 52062 Aachen (DE); TIETZ, Frank, 52428 Jülich (DE); CHRISTIANSEN, Niels, 2820 Gentofte (DK); GORDES, Petru, 2970 Horsholm (DK); RIETVELD, Gijsbertus, 1827 EH Alkmaar (NL); DEKKER, Nicolaas Jacobus Joseph, 1051 PM Amsterdam (NL)
(74) Vertreter: Gille Hrabal Struck Neidlein Prop Roos
(86) Internationale Anmeldenummer: PCT/DE2005/000472
(87) Internationale Veröffentlichungsnummer: WO 2005/091408

(56) Entgegenhaltungen:
- EP-A- 0 395 399
- US-A1- 2002 048 699
- US-B1- 6 200 541
- US-B1- 6 605 316
- J.H. KIM ET AL: "Fabrication and characteristics of anode-supported flat-tube solid oxide fuel cell" JOURNAL OF POWER SOURCES, Bd. 122, 2003, Seiten 138-143, XP002338618
- I. TANIGUCHI ET AL: "Fabrication of La1-x Srx Co1-y Fey O3 thin films by electrostatic spray deposition" SOLID STATE IONICS, Bd. 156, 2003, Seiten 1-13, XP002338619
- PATENT ABSTRACTS OF JAPAN Bd. 2000, Nr. 05, 14. September 2000 (2000-09-14) & JP 2000 044245 A (TOTO LTD), 15. Februar 2000 (2000-02-15)
- "Metals Handbook, Band 1, 10 Ausgabe" 1990, ASM , OHIO, US , XP002338626 Seite 843

## Beschreibung

Die Erfindung betrifft einen elektrisch leitfähigen Verbund aus einem Stahl und einer Keramik, der vorteilhaft in einer Hochtemperatur-Brennstoffzelle eingesetzt werden kann und dort insbesondere die Verbindung zwischen einem Interkonnektor und einer Kathode zu bilden vermag. Ferner betrifft die Erfindung ein Herstellungsverfahren für einen solchen Verbund.

### Stand der Technik

Hochtemperatur-Brennstoffzellen werden für Betriebstemperaturen zwischen 650 °C und 1000 °C entwickelt. Je nach Entwicklungsziel kommen unterschiedliche Werkstoffe zum Einsatz, die für die angestrebte Betriebstemperatur geeignet sind. Der Verbund aus Anode, Elektrolyt und Kathode wird Einzelzelle genannt. Ein Interkonnektor ist ein verbindendes Bauelement, welches einzelne Brennstoffzellen miteinander verbindet. Ein Interkonnektor weist typischerweise Strom-Leitungsstege und Brennstoffkanäle auf. Zwischen einem Interkonnektor und einer Elektrode einer Einzelzelle wird in der Regel eine Verbindungsschicht angeordnet. Das Material eines Interkonnektors, das der Elektroden sowie das Material der Verbindungsschicht werden in der Regel aufeinander abgestimmt, um chemische Wechselwirkungen möglichst gering zu halten.

So werden beispielsweise Brennstoffzellen, die bei 1000 °C betrieben werden, häufig aus einer ca. 200 µm dicken Elektrolytschicht aus Yttriumoxid-stabilisiertem Zirkoniumoxid aufgebaut, auf der die etwa 50 µm dicken Elektroden aufgebracht werden. Als Kathodenmaterial ist dabei Lanthanmanganit und als Anodenmaterial ein Gemisch aus Ni und YSZ bekannt. Als Interkonnektoren werden beispielsweise temperaturbeständige Keramikplatten aus Lanthanchromit für den Aufbau eines Zellenstapels verwendet, wie aus [1] bekannt ist. Darin wird beschrieben, dass die Zellen durch einen Fügeprozess, d. h. durch eine Temperaturbehandlung bei etwa 1200 bis 1300 °C miteinander verbunden und abgedichtet werden. Dabei werden in der Regel keramische Pasten zwischen den Elektroden und den Interkonnektoren aufgebracht, die während der Temperaturbehandlung aushärten und sich durch Diffusionsprozesse (Sinterung) fest mit den benachbarten Brennstoffzellenkomponenten verbinden. Um eine chemische Wechselwirkung zwischen den Komponenten möglichst zu vermeiden, werden in der Regel chemisch ähnliche und miteinander verträgliche Werkstoffe eingesetzt. So kann man beispielsweise für das Fügen zwischen Kathode und Interkonnektor eine Paste aus dem Kathodenwerkstoff Lanthanmanganit oder dem Interkonnektorwerkstoff Lanthanchromit verwenden.

Für niedrigere Betriebstemperaturen um 800°C wurden andere Brennstoffzellen-Systeme entwickelt, bei denen durch Verringerung des elektrischen Widerstandes des Elektrolyten eine gleiche Zellenleistung bei niedriger Temperatur möglich ist [2]. Gleichzeitig kann durch die niedrigeren Betriebstemperaturen ein wesentlich kostengünstigerer Interkonnektor aus ferritischem Stahl verwendet werden, wie er beispielsweise aus DE 100 25 108 A1 bekannt ist.

Nachteilig ergibt sich bei diesem Brennstoffzellen-System das Problem, dass Fügetemperaturen von mehr als 900 °C unbedingt zu vermeiden sind, damit die metallischen Interkonnektoren nicht geschädigt werden. Andererseits sind die bisher verwendeten Materialien für eine Verbindungsschicht aus Lanthanmanganit oder Lanthankobaltit bei Temperaturen von 900 °C oder darunter wenig sinteraktiv, d. h. die notwendigen Diffusionsprozesse sind zu gering, als dass auf Dauer ein guter elektrischer Kontakt entsteht.

Daher wurden in der Vergangenheit Verbundsysteme aus temperaturbeständigeren Chrom-Basis-Legierungen und Kathodenmaterialien einer oxidkeramischen Brennstoffzelle als geeignet angesehen und bei Temperaturen von 900 -1000 °C hergestellt und geprüft (siehe [3]). Weiterführende Untersuchungen haben gezeigt, dass in Kombination mit ferritischen Stählen, die einen Chromgehalt von 20 - 24 % und insbesondere auch geringe Gehalte von weniger als 2 % an Mangan aufweisen, die chemische Wechselwirkungen am geringsten ist, wenn auch für das Material der Verbindungsschicht eine Manganhaltige Keramik eingesetzt wird. Dazu gehören insbesondere die als Kathodenwerkstoffe bekannten Materialien auf (La, Sr)(Mn, Co)O₃-Basis (siehe DE 197 02 619 C1), die jedoch wegen der höheren Widerstandswerte in Kombination mit ferritischen Metallen als Verbindungswerkstoff wenig attraktiv erschienen.

Larring und T. Norby zeigten, dass die niedrigsten Übergangswiderstände (R₀ < 0,01 Ω cm²) mit keramischen Werkstoffen aus Lanthankobaltit (La₁₋ₓSrₓCoO₃ mit 0 < x < 0,2) als Verbindungsschicht erhalten wurden. Betrachtet man einen heute üblichen inneren, flächenbezogenen Widerstand einer Brennstoffzelle von 0,3 - 0,5 Ω cm², entspricht ein Spannungsabfall von 0,01 Ω cm² an der Interkonnektor-Kathoden-Grenzfläche ca. 2 - 3 % des Gesamtwiderstands. Andere Materialkombinationen zeigten jedoch Widerstände, die nachteilig um den Faktor 2-100 größer waren und damit den flächenbezogenen Widerstand einer Brennstoffzelle zu stark beeinträchtigen.

Nachteilig an den bislang bekannten keramischen Verbindungen ist auch, dass die Schichten, die sich aus den keramischen Pasten bilden, regelmäßig sehr porös sind und dadurch eine Korrosion des Stahls durch die durchströmende Luft im Kathodenraum nicht zu verhindern vermögen.

Dies ist insofern von Belang, da aus R. Ruckdäschel, R. Henne, G. Schiller, H. Greiner, in: Proc. 5th Int. Symp. Solid Oxide Fuel Cells (SOFC-V), Hrsg.: U. Stimming, S. C. Singhal, H. Tagawa, W. Lehnert, The Electrochemical Society, Pennington, NJ, 1997, S. 1273 bekannt ist, dass eine korrosionsschützende Keramikschicht dicht sein sollte, damit auch eventuelle Kontaminationen der Kathode durch Chrom aus dem Stahl vermieden werden.

J. M. KIM ET AL, JOURNAL of POWER SOURCES, Id 122 S. 138-173, 2003, offenbart ein Verfahren zur Beschictung eines Interkonnektors aus Feuralloy mit LSM.

### Aufgabe und Lösung

Aufgabe der Erfindung ist es, eine keramische Schicht für den Einsatz in einer Brennstoffzelle zu schaffen, die bei Temperaturen unterhalb von 900 °C eine elektrische leitfähige und fest haftende Verbindungsschicht zwischen einer Elektrode und einem Interkonnektor dieser Brennstoffzelle zu bilden vermag und einen elektrischen Übergangswiderstand R₀ von weniger als 0,01 Ω cm² aufweist.
Ferner ist es Aufgabe der Erfindung, ein Herstellungsverfahren für eine solche Verbindungsschicht zu schaffen. Auch ist es Aufgabe der Erfindung eine Brennstoffzelle bzw. einen Brennstoffzellenstapel für den Betrieb bei niedrigen Betriebstemperaturen zur Verfügung zu stellen, bei der bzw. dem eine leitfähige und fest haftende Verbindung zwischen einer Elektrode und einem Interkonnektor, insbesondere aus ferritischem Stahl, vorliegt und der Übergangswiderstand zwischen Elektrode und Stahl so gering und stabil ist, dass dieser praktisch keinen Einfluss auf den Langzeitbetrieb ausübt.

Die Aufgaben der Erfindung werden gelöst durch ein Herstellungsverfahren mit den Merkmalen des Anspruchs 1. Die Aufgabe wird weiterhin gelöst durch einen Stahl-Keramik-Verbund mit den Merkmalen des Nebenanspruchs. Ferner wird die Aufgabe durch die Verwendung dieses Stahl-Keramik-Verbunds gemäß weiterem Nebenanspruch gelöst.

Vorteilhafte Ausführungsformen des Herstellungsverfahrens, des Stahl-Keramik-Verbunds sowie seiner Verwendung sind den jeweils darauf rückbezogenen Ansprüchen zu entnehmen.

### Gegenstand der Erfindung

Der erfindungsgemäße Stahl-Keramik-Verbund besteht aus einem Interkonnektor aus Stahl und einer darauf angeordneten keramischen Verbindungsschicht. Mit Hilfe dieser keramischen Verbindungsschicht zwischen Stahl und Keramik können eine Elektrode und ein Interkonnektor einer Brennstoffzelle miteinander verbunden werden, wobei die Verbindungsschicht die gleiche oder ähnliche Zusammensetzung wie die Elektrode aufweist.

Der Interkonnektor des erfindungsgemäßen Stahl-Keramik-Verbundes besteht vorteilhaft aus einem Stahl, insbesondere einem ferritischen Stahl, wie er beispielsweise in DE 100 25 108 A1 beschrieben wird. Dort werden Stähle offenbart, die eine chromoxidbildende Legierung mit 12 bis 28 Gew.-% Chrom, 0,1 bis 0,4 Gew.-% wenigstens eines sauerstoffaffinen Elements aus der Gruppe (Y, Ce, Zr, Hf und La), 0,2 bis 1 Gew.-% Mn, 0,1 bis 0,4 Gew.-% Ti sowie bis 2 Gew.-% eines weiteren Elements aus der Gruppe (Hf, Sr, Ca und Zr) enthalten, welches die elektrische Leitfähigkeit von Oxiden auf Cr-Basis erhöht. Solche Werkstoffe bilden bei Temperaturen zwischen 700 und 950 °C an der Grenzfläche Oxid/Gas regelmäßig eine MnCr₂O₄-Spinellphase aus. Optional können solche Stähle auch noch 0,1 bis 0,4 Gew.-% eines weiteren Elements aus der Gruppe (Hf, Sr, Ca und Zr) aufweisen, sowie bis zu 0,5 Gew.-% Si und/oder Aluminium. Die vorgenannten Stähle mit einem Chromgehalt von 18 bis 24 Gew.-% haben sich als besonders vorteilhaft herausgestellt.

Der erfindungsgemäße Stahl-Keramik-Verbund weist ferner eine keramische Verbindungsschicht auf. Als geeignete Materialien für eine solche Verbindungsschicht können insbesondere Perowskite mit einer Zusammensetzung gemäß der Formel Ln₁₋ₓSrₓMn_{1-y}Co_{y}O_{3-δ} oder Ln₁₋ₓSrₓFe_{1-y}Co_{y}O_{3-δ} genannt werden, mit 0, 1 ≤ x ≤ 0,4, 0,1 ≤ y ≤ 0,6, 0 ≤ δ ≤ x/2 und Ln = La-Lu.

Es hat sich herausgestellt, dass diese Materialien eine elektrische Leitfähigkeit von 60 bis 600 S/cm aufweisen und schon bei Temperaturen von 700 °C bis 900 °C sehr gut haftende Schichten auf einem Interkonnektor bzw. einer Elektrode ausbilden. Der Wert von 60 S/cm wird dabei von Verbindungen mit x, y = 0,1 erreicht, während der größere Wert für Verbindungen mit x = 0,4; y = 0,6 erhalten wird.

Diese keramische Verbindungsschicht in dem Verbund ermöglicht es daher vorteilhaft, bei Brennstoffzellen-Systemen, die bei geringeren Betriebstemperaturen als 900 °C betrieben werden, ferritischen Stahl als Interkonnektormaterial einzusetzen. Ein solcher Stahl ist vorteilhaft sehr viel kostengünstiger als die Materialien, die bislang für einen Hochtemperatureinsatz notwendig sind, wie beispielsweise Chrom-Basis-Legierungen.

Diese vorgenannten Eigenschaften können insbesondere durch das erfindungsgemäße Herstellungsverfahren des Stahl-Keramik-Verbundes erzielt werden. Dabei wird zunächst ein Pulver mit der Zusammensetzung der keramischen Verbindungsschicht hergestellt. Dieses Pulver wird bei der Herstellung einer maximalen Temperaturbehandlung von 500 bis 700 °C ausgesetzt. Dieser Verfahrenschritt ermöglicht einerseits, dass die bei der Herstellung des Pulvers benötigten flüchtigen Bestandteile ausgetrieben werden. Ferner zeigen die auf diese Art behandelten Pulver vorteilhaft die Eigenschaft, dass sie, wenn sie auf den ferritischen Interkonnektor aufgebracht werden, in einem nachfolgenden Fügeprozess um 800 bis 900 °C sehr gute Hafteigenschaften aufweisen, die deutlich über den bekannten Hafteigenschaften liegen, wie sie für die Kombination Interkonnektor auf Chrom Basis Legierung und Verbindungsschicht aus Kathodenmaterial einer SOFC liegen. Zudem konnten durch Änderung der Pulveraufbereitung im Anschluss an das bekannte Herstellungsverfahren der Tropfenpyrolyse Keramikpulver hergestellt werden, die zwischen 700 und 900 °C eine ausreichende Sinterfähigkeit besitzen, und den zuvor genannten Nachteil nicht mehr aufwiesen (siehe dazu [4]).

Das Pulver selbst wird in Form einer Suspension oder einer Paste auf den Interkonnektor aufgebracht. Dazu geeignete Verfahren wie beispielsweise Pulverspritzen oder Rakeln oder Rollen sind aus dem Stand der Technik bekannt. Geeignete Schichtdicken für die aufgebrachte Suspension oder Paste liegen im Bereich von 20 bis 100 µm.

Bei dem Herstellungsverfahren des erfindungsgemäßen Stahl-Keramik-Verbundes kann vorteilhaft auch gleich eine Elektrode mit einbezogen werden. Das bedeutet, das die Suspension oder die Paste, die den Perowskiten für die Verbindungsschicht aufweist, zwischen dem Interkonnektor und der Elektrode angeordnet wird. Zusammen können dann der Interkonnektor, die Elektrode und die dazwischen angeordnete Suspension oder Paste bei Temperaturen zwischen 700 und 900 °C gefügt werden.

Vorteilhaft kann das Material für diese elektrisch leitfähige, keramische Verbindungsschicht zwischen Interkonnektor und Kathode genutzt werden, um so zusätzlich Fertigungstoleranzen auszugleichen.

Im Rahmen dieser Erfindung konnte außerdem auch das Probleme der höheren Übergangswiderstandswerte in Kombination mit anderen (ferritischen) Metallen überwunden werden, da die so hergestellten Verbindungsschichten in Kombination mit einem ferritischen Interkonnektor regelmäßig einen sehr kleine Übergangswiderstand von weniger als R = 0,01 Ω cm² aufweisen, und der auch im Dauerbetrieb einer Brennstoffzelle keine merklichen Änderungen zeigt (ΔR von weniger als 0,005 Ω cm² pro 1000 Stunden Betriebsdauer). Dies lässt sich auf die sehr dünne Korrosionsschicht zurückführen, die sich bei den erfindungsgemäßen Materialkombinationen an der Grenzfläche zwischen Interkonnektor und keramischer Verbindungsschicht ausbildet. Es wurde eine nur sehr geringe Wachstumskinetik der Korrosionsschicht beobachtet. So konnte selbst nach einigen hundert Stunden Betriebsdauer in einer Hochtemperatur-Brennstoffzelle bei ca. 750 °C Betriebstemperatur eine nur 0,1 bis 2 µm dicke Korrosionsschicht nachgewiesen werden.

### Spezieller Beschreibungsteil

Im Folgenden wird die Erfindung anhand zweier Figuren und eines Ausführungsbeispiels zur Herstellung einer erfindungsgemäßen Verbindungsschicht näher erläutert, ohne dass der Erfindungsgegenstand dadurch beschränkt werden soll.

Es zeigen:
- Figur 1:: Kontaktwiderstandsmessungen an erfindungsgemäßen Stahl-Keramik-Verbunden bei 750°C. Die Kurven zeigen den Verlauf für die Materialkombinationen:
1: Fe 22Cr Mn-Stahl und La_{0,8}Sr_{0,2}Mn_{0,5}Co_{0,50}O_{3-δ}-Keramik,
2: Fe 22Cr Mn-Stahl und Y_{0,3}Ca_{0,7}MnO_{3-δ}-Keramik,
3: Fe 23Cr Mn-Stahl und La_{0,8}Sr_{0,2}CoO_{3-δ}-Keramik,
4: Fe 23Cr Mn-Stahl und Y_{0,3}Ca_{0,7}MnO_{3-δ}-Keramik.
- Figur 2:: Querschnitt durch einen erfindungsgemäßen Fe 22Cr Mn-La_{0,8}Sr_{0,2}Mn_{0,5}Co_{0,5}O_{3-δ}-Verbund nach 1000 Stunden Test bei 750 °C. oben: Stahl, unten: Keramik. Die dunkelgraue Reaktionszone zwischen Stahl und Keramik ist etwa 1-1,5 µm dick.

Gegenstand der Erfindung ist ein Stahl-Keramik-Verbund, der eine hohe elektrische Leitfähigkeit für einen elektrischen Kontakt zwischen Kathode und Interkonnektor (in diesem Fall einem ferritischen Stahl) aufweist und der bereits bei Temperaturen von 700-900 °C gut haftende Schichten ausbildet. Die für den erfindungsgemäßen Stahl-Keramik-Verbund verwendeten keramischen Materialien sind gut bekannt als Kathodenmaterialien für die oxidkeramische Brennstoffzelle und bestehen aus (La, Sr)(Mn, Co)O_{3-δ}-Perowskiten.

Die Schichten aus diesen Materialien sind bei den angegebenen Temperaturen verformbar und können während der Assemblierung innere Spannungen durch die geometrische Anordnung des Zellenstapels, einer außen angelegten Kraft abbauen. Als Beispiel ist hier die Verfahrensweise für die Zusammensetzung La_{0,8}Sr_{0,2}Mn_{0,5}Co_{0,5}O_{3-δ} angeführt:
a) Aus den entsprechenden Nitrat- und Acetatsalzen und Wasser gemäß [4] wird ein Rohpulver hergestellt, das nach der Tropfenpyrolyse noch weitgehend amorph ist und flüchtige Bestandteile enthält.
b) Zum Austreiben dieser flüchtigen Bestandteile wird das Pulver einer Temperaturbehandlung unterzogen, die jedoch noch nicht dazu führt, dass Sinterprozesse eintreten. Typischerweise liegen die Temperaturen für die Pulverbehandlung bei 500-700 °C. Flüchtige Bestandteile sind innerhalb weniger Stunden ausgetrieben.
c) 100 g des Pulvers mit einer mittleren Korngröße zwischen 0,3 bis 1,5 µm wird mit 100 bis 300 g einer ethanolischen Lösung vermischt und anschließend auf einer Rollenbank so homogenisiert, dass eine stabile Suspension entsteht. Zur Stabilisierung der Suspension werden 1 bis 8 g Dispergiermittel, wie beispielsweise Dolapix ET85, Dolapix PC33, Hypermer KD2, Hypermer KD6, Hypermer KD7 bzw. BYK 9077 und 1 bis 10 g Binder, wie z. B. Poly(vinyl acetat), Methyl- bzw. Ethylecellulosen oder Polyvinylalkohole verwendet.
d) Diese Suspension wird durch eine Sprühtechnik, in diesem Fall durch Nasspulverspritzen, auf die Interkonnektorplatten aus ferritischem Stahl aufgebracht, wodurch eine vollständige Beschichtung sowohl der Leitungsstege als auch der Gaskanäle erzielt wird. Die Dicke der Schicht sollte nach der Beschichtung etwa 20-100 µm betragen.
e) Nach Trocknen der Schicht werden die besprühten Interkonnektorplatten und die am Rand mit Glaslot beschichteten Brennstoffzellen abwechselnd zu einem Brennstoffzellenstapel zusammengesetzt.
f) Nach dem Einsetzen in ein Metallgehäuse mit Gasversorgungseinrichtung wird dieses Modul auf 800 - 900 °C, vorzugsweise 850 °C für 2 bis 5 Stunden aufgeheizt und ist dann einsatzfähig.

Bei der Beschreibung der Figuren werden folgende Abkürzungen verwendet:
Fe 22Cr Mn-Stahl = (JS3),
Fe 23Cr Mn-Stahl = (ZMG232),
La_{0,8}Sr_{0,2}Mn_{0,5}Co_{0,5}O_{3-δ}-Keramik = (LSMC) und
Y_{0,3}Ca_{0,7}MnO_{3-δ}-Keramik = YCM).

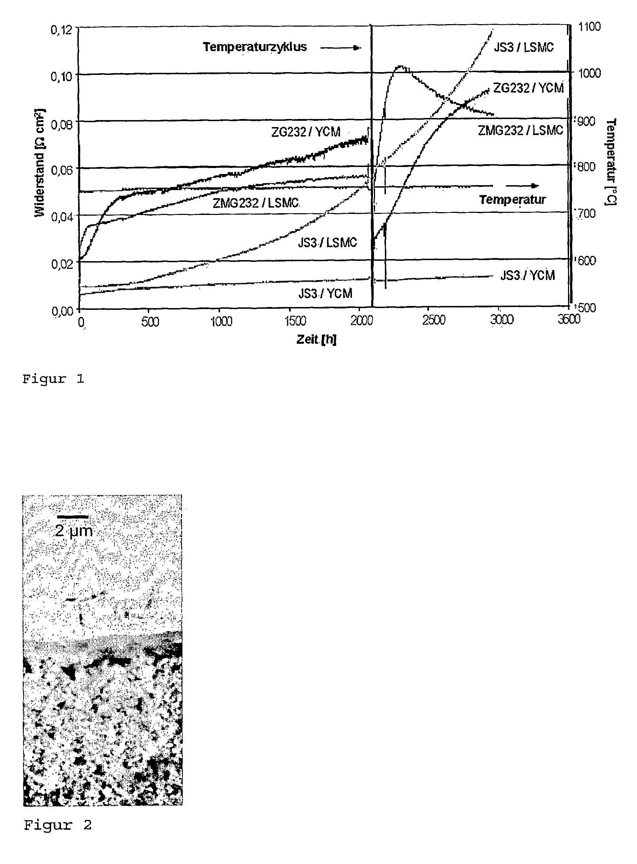

Das Resultat eines solchen Stahl-Keramik-Verbundes (1), d. h. eines Fe 22Cr Mn-La_{0,8}Sr_{0,2}Mn_{0,5}Co_{0,5}O_{3-δ}-Verbundes ist in Figur 1 dargestellt. Dieser Verbund zeigt zu Beginn der Messung einen sehr geringen Widerstand von R₀ = 0,008 Ω cm². Während der gesamten Messdauer ändert sich der Widerstand nur um 0,002 Ω cm² /1000 h und ist damit außerordentlich stabil.

Der Vergleich in Abbildung 1 mit Y_{0,3}Ca_{0,7}MnO_{3-δ} und dem Stahl ZMG232 (2) zeigt, dass sowohl die Keramik als auch der Stahl einen wesentlichen Einfluss auf den Widerstand ausübt, wobei die Stahlzusammensetzung nur geringfügig anders ist (Hauptbestandteile). Die Angaben in der folgenden Tabelle sind Angaben in Gew.-%

| | Fe | Cr | Si | Mn | Ni | Al | N |
|---|---|---|---|---|---|---|---|
| ZMG232 | 74,3 | 22,0 | 0,43 | 0,51 | 1,3 | 0,24 | 0,004 |
| JS3 | 75,2 | 22,9 | 0,14 | 0,55 | 0,95 | 0,17 | 0,013 |

Als Gründe für die niedrigen Widerstände ist anzuführen, dass
a) die Reaktionszone zwischen Fe 22Cr Mn-Stahl und La_{0,8}Sr_{0,2}Mn_{0,5}Co_{0,5}O_{3-δ}-Keramik nach 500 Stunden Testdauer bei 750 °C nur etwa 0,5 µm und nach 1000 Stunden Testdauer nur etwa 1 bis 1,5 µm dick ist (siehe Figur 2) und dass
b) durch den niedrigeren Si-Gehalt keine SiO₂-Anreicherungen an der Reaktionszone zu beobachten sind.

In der Anmeldung zitierte Literatur:
[1] D. Stolten, in: Verbundwerkstoffe und Werkstoffverbunde, Hrsg.: G. Ziegler, DGM Informationsgesellschaft-Verlag, 1996, S. 283
[2] H. P. Buchkrerner, U. Diekmann, L. G. J. de Haart, H. Kabs, U. Stimming, D. Stöver, in: Proc. 5th Int. Symp. Solid Oxide Fuel Cells (SOFC-V), Hrsg.: U. Stimming, S. C. Singhal, H. Tagawa, W. Lehnert, The Electrochemical Society, Pennington, NJ, 1997, S. 160
[3] Y. Larring und T. Norby, J. Electrochem. Soc. 147 (2000) 3251-3256).
[4] N. Christiansen und P. Gordes, Powder Synthesis and Tape Casting o Strontium Doped Lanthanum Manganites for SOFC Electrodes, in Proc. Second Intl. Symp. on Solid Oxide Fuel Cells, ed. F. Grosz und P. Zegers, Athen (1991), S. 495).

## Patentansprüche

1. Verfahren zur Herstellung eines Stahl-Keramik-Verbundes umfassend einen Interkonnektor aus Stahl, sowie eine darauf angeordnete keramische, elektrisch leitfähige Verbindungsschicht, mit den Schritten
a) es wird ein Interkonnektor aus einem ferritischen Stahl umfassend 18-24 Gew.-% Cr eingesetzt,
b) auf den Interkonnektor wird eine Suspension oder Paste umfassend einen Perowskiten mit der Zusammensetzung Ln₁₋ₓSrₓMn_{1-y}Co_{y}O_{3-δ} oder Ln₁₋ₓSrₓFe_{1-y}Co_{y}O_{3-δ} aufgebracht,
mit 0,1 ≤ x ≤ 0,4, 0,1 ≤ y ≤ 0,6, 0 ≤ δ ≤ x/2 und Ln = La-Lu,
c) der Interkonnektor und die darauf aufgebrachte Suspension oder Paste werden auf eine Fügetemperatur zwischen 800 - 900°C erwärmt, wobei sich aus der Suspension oder der Paste die keramische, elektrisch leitfähige Verbindungsschicht ausbildet.

2. Verfahren nach vorhergehendem Anspruch 1, bei dem
a) zunächst aus einer nitrat- und acetathaltigen Lösung ein Rohpulver mit einer Zusammensetzung gemäß der Formel Ln₁₋ₓSrₓMn_{1-y}Co_{y}O_{3-δ} oder Ln₁₋ₓSrₓFe_{1-y}Co_{y}O_{3-δ} mit 0,1 ≤ x ≤ 0,4, 0,1 ≤ y ≤ 0,6, 0 ≤ δ ≤ x/2 und Ln = La-Lu hergestellt wird,
b) das Pulver bei 500 - 700 °C temperaturbehandelt wird,
c) und aus dem Pulver eine Suspension oder Paste hergestellt wird, die auf den Interkonnektor aufgebracht wird.

3. Verfahren nach einem der vorhergehenden Ansprüche 1 bis 2, bei dem ein Interkonnektor aus einem ferritischen Stahl umfassend 18 - 24 Gew.-% Cr und weiteren Legierungselementen, insbesondere Mn, mit jeweils weniger als 2 Gew.-%, eingesetzt wird.

4. Verfahren nach einem der vorhergehenden Ansprüche 1 bis 3, bei dem das Aufbringen der Suspension oder Paste zwischen dem Interkonnektor und einer oxidkeramischen Kathode erfolgt, und der Interkonnektor, die aufgebrachte Suspension oder Paste und die Kathode gemeinsam auf die Fügetemperatur zwischen 800 - 900°C erwärmt werden.

5. Verfahren nach einem der vorhergehenden Ansprüche 1 bis 4, bei dem eine Suspension oder Paste umfassend einen Perowskiten mit der Zusammensetzung La_{0,8}Sr_{0,2}CoO_{3-δ} mit 0 ≤ δ ≤ x/2 aufgebracht wird.

6. Stahl-Keramik-Verbund hergestellt nach einem Verfahren gemäß einem der Ansprüche 1 bis 5, umfassend
a) einen Interkonnektor aus einem ferritischen Stahl mit 18 - 24 Gew.-% Cr sowie
b) eine darauf angeordnete keramische, elektrisch leitfähige Verbindungsschicht, die einen Perowskiten der Zusammensetzung Ln₁₋ₓSrₓMn_{1-y}Co_{y}O_{3-δ} oder Ln₁₋ₓSrₓfe_{1-y}Co_{y}O_{3-δ} aufweist,
mit 0, 1 ≤ x ≤ 0,4, 0,1 ≤ y ≤ 0,6, 0 ≤ δ ≤ x/2 und Ln = La-Lu, wobei
c) der Anfangsübergangswiderstand an der Grenzfläche Interkonnektor - keramische Verbindungsschicht weniger als R = 0,01 Ω cm² beträgt.

7. Stahl Keramik-Verbund nach vorhergehendem Anspruch 6, der im Dauereinsatz bei Temperaturen unterhalb von 900 °C an der Grenzfläche Interkonnektor - keramische Verbindungsschicht eine Korrosionsschicht aufweist, die dünner als 2 µm, insbesondere dünner als 1 µm ist.

8. Stahl-Keramik-Verbund nach einem der vorhergehenden Ansprüche 6 bis 7, bei dem der Übergangswiderstand bei Einsatz unterhalb von 850 °C eine Widerstandsänderung ΔR von weniger als 0,005 Ω cm² pro 1000 Stunden Betriebsdauer aufweist.

9. Stahl -Keramik-Verbund nach einem der vorhergehenden Ansprüche 6 bis 8, bei dem der Interkonnektor aus einem ferritischen Stahl mit 18 - 24 Gew.-% Cr und weiteren Legierungselementen, insbesondere Mn, mit jeweils weniger als 2 Gew.-%, besteht.

10. Stahl-Keramik-Verbund nach einem der vorhergehenden Ansprüche 6 bis 9, bei dem die keramische Verbindungsschicht eine Zusammensetzung gemäß der Formel Ln₁₋ₓSrₓMn_{1-y}Co_{y}O_{3-δ} oder Ln₁₋ₓSrₓFe_{1-y}Co_{y}O_{3-δ} aufweist,
mit 0,1 ≤ x ≤ 0,4, 0,1 ≤ y ≤ 0,6, 0 ≤ δ ≤ x/2 und Ln = La-Lu.

11. Verwendung eines Stahl-Keramik-Verbunds nach einem der Ansprüche 6 bis 10 in einer Hochtemperatur-Brennstoffzelle.

12. Verwendung eines Stahl-Keramik-Verbunds nach Anspruch 6 bis 10 in einem Hochtemperatur-Brennstoffzellenstapel.

## Claims

1. Manufacturing process for a steel / ceramic composite comprising an interconnector made of steel and a ceramic, electrically conductive connection layer arranged on it, with the following steps:
a) an interconnector made of a ferritic steel comprising 18 - 24 weight % Cr is used;
b) a suspension or paste comprising a perovskite with the composition Ln₁₋ₓSrₓMn_{1-y}Co_{y}O_{3-δ} or Ln₁₋ₓSrₓFe_{1-y}Co_{y}O_{3-δ} is applied onto the interconnector;
where 0.1 ≤ x ≤ 0.4, 0.1 ≤ y ≤ 0.6, 0 ≤ δ ≤ x/2, and Ln = La-Lu;
c) the interconnector and the suspension or paste applied onto it are heated to a joining temperature between 800 - 900° C, the ceramic, electrically conductive connection layer forming from the suspension or the paste.

2. The process described in the preceding claim 1, in which
a) first, a raw powder is produced from a solution containing nitrate and acetate, the raw powder having a composition according to the formula Ln₁₋ₓSrₓMn_{1-y}Co_{y}O_{3-δ} or Ln_{1 x}SrₓFe_{1-y}Co_{y}O_{3-δ}, where 0.1 ≤ x ≤ 0.4, 0.1 ≤ y ≤ 0.6, 0 ≤ δ ≤ x/2, and Ln = La-Lu;
b) the powder is heat treated at 500 - 700° C; and
c) the powder is used to make a suspension or paste, which is applied onto the interconnector.

3. The process described in one of the preceding claims 1 through 2, in which an interconnector is used that is made of a ferritic steel comprising 18 - 24 weight % Cr and other alloying elements, in particular Mn, each of which comprises less than 2 weight %.

4. The process described in one of the preceding claims 1 through 3, in which the suspension or paste is applied between the interconnector and an oxide ceramic
cathode, and the interconnector, the applied suspension or paste, and the cathode are heated together to a joining temperature between 800 - 900° C.

5. The process described in one of the preceding claims 1 through 4, in which a suspension or paste is applied that comprises a perovskite with the composition La_{0.8}Sr_{0.2}CoO_{3-δ} where 0 ≤ δ ≤ x/2.

6. A steel / ceramic composite produced according to a process described in one of claims 1 through 5, comprising the following:
a) an interconnector made of a ferritic steel comprising 18 - 24 weight % Cr; and
b) a ceramic, electrically conductive connection layer arranged on it, which has a perovskite of the composition Ln₁₋ₓSrₓMn_{1-y}Co_{y}O_{3-δ} or Ln₁₋ₓSrₓfe_{1-y}Co_{y}O_{3-δ}, where 0.1 ≤ x ≤ 0.4, 0.1 ≤ y ≤ 0.6, 0 ≤ δ ≤ x/2, and Ln = La-Lu;
c) the initial contact resistance at the interface of the interconnector and the ceramic connection layer being less than R = 0.01 Ω cm².

7. A steel / ceramic composite described in the preceding claim 6, which, when used in continuous operation at temperatures below 900° C, has, at the interface of the interconnector and the ceramic connection layer, a corrosion layer that is thinner than 2 µm, in particular thinner than 1 µm.

8. A steel / ceramic composite described in one of the preceding claims 6 through 7, in which the contact resistance when used below 850° C exhibits a change in resistance ΔR of less than 0.005 Ω cm² per 1,000 hours of operation.

9. A steel / ceramic composite described in one of the preceding claims 6 through 8, in which the interconnector consists of a ferritic steel comprising 18 - 24 weight % Cr and other alloying elements, in particular Mn, each of which comprises less than 2 weight %.

10. A steel / ceramic composite described in one of the preceding claims 6 through 9, in which the ceramic connection layer has a composition according to the formula Ln₁₋ₓSrₓMn_{1-y}Co_{y}O_{3-δ} or Ln₁₋ₓSrₓFe_{1-y}Co_{y}O_{3-δ},
where 0.1 ≤ x ≤ 0.4, 0.1 ≤ y ≤ 0.6, 0 ≤ δ ≤ x/2, and Ln = La-Lu. 2. The process described in the preceding claim 1, in which
a) first, a raw powder is produced from a solution containing nitrate and acetate, the raw powder having a composition according to the formula Ln₁₋ₓSrₓMn_{1-y}Co_{y}O_{3-δ} or Ln₁₋ₓSrₓFe_{1-y}Co_{y}O_{3-δ}, where 0.1 ≤ x ≤ 0.4, 0.1 ≤ y ≤ 0.6, 0 ≤ δ ≤ x/2, and Ln = La-Lu;
b) the powder is heat treated at 500 - 700° C; and
c) the powder is used to make a suspension or paste, which is applied onto the interconnector.

11. Use of a steel / ceramic composite described in one of the preceding claims 6 through 10, in a high temperature fuel cell.

12. Use of a steel / ceramic composite described in claim 6 through 10, in a high temperature fuel cell stack.

## Revendications

1. Procédé pour la fabrication d'un composite acier-céramique comprenant un interconnecteur en acier, ainsi qu'une couche de liaison en céramique électriquement conductrice disposée par dessus, comprenant les étapes suivantes :
a) on utilise un interconnecteur constitué d'un acier ferritique comprenant 18 à 24 % en poids de Cr,
b) sur l'interconnecteur, on dépose une suspension ou pâte comprenant une pérovskite ayant pour composition Ln₁₋ₓSrₓMn_{1-y}Co_{y}O_{3-δ} ou Ln₁₋ₓSrₓFe_{1-y}Co_{y}O_{3-δ},
avec 0,1 ≤ x ≤ 0, 4, 0,1 ≤ y ≤ 0, 6, 0 ≤ δ ≤ x/2 et Ln = La-Lu,
c) l'interconnecteur et la suspension ou pâte qui est déposée par dessus sont chauffés à une température de montage située entre 800 et 900°C, où la couche de liaison en céramique électriquement conductrice se compose de la suspension ou de la pâte.

2. Procédé selon la revendication précédente 1, dans lequel
a) à partir d'une solution contenant du nitrate ou de l'acétate, on fabrique d'abord une poudre brute ayant une composition selon la formule Ln₁₋ₓSrₓMn₁-_{y}CO_{y}O_{3-δ} ou Ln₁₋ₓSrₓFe_{1-y}Co_{y}O_{3-δ}, avec 0,1 ≤ x ≤ 0,4, 0,1 ≤ y ≤ 0,6, 0 ≤ δ ≤ x/2 et Ln = La-Lu,
b) la poudre est traitée thermiquement à 500 - 700°C,
c) et on fabrique une suspension ou pâte, qui est déposée sur l'interconnecteur, à partir de la poudre.

3. Procédé selon l'une des revendications précédentes 1 à 2, dans lequel on utilise un interconnecteur constitué d'un acier ferritique comprenant 18 à 24 % en poids de Cr et d'autres éléments d'alliage, en particulier Mn, avec respectivement moins de 2 % en poids.

4. Procédé selon l'une des revendications précédentes 1 à 3, dans lequel on réalise le dépôt de la suspension ou pâte entre l'interconnecteur et une cathode en céramique oxydée, et l'interconnecteur, la suspension ou pâte déposée et la cathode sont chauffés ensemble à la température de montage située entre 800 et 900°C.

5. Procédé selon l'une des revendications précédentes 1 à 4, dans lequel on dépose une suspension ou pâte comprenant une pérovskite ayant la composition La_{0,8}Sr_{0,2}CoO_{3-δ}, avec 0 ≤ δ ≤ x/2.

6. Composite acier-céramique fabriqué d'après un procédé selon l'une des revendications 1 à 5, comprenant
a) un interconnecteur constitué d'un acier ferritique comprenant 18 à 24 % en poids de Cr, et
b) une couche de liaison en céramique électriquement conductrice, déposée par dessus, comprenant une pérovskite ayant pour composition Ln₁-ₓSrₓMn_{1-y}Co_{y}O_{3-δ} ou Ln₁₋ₓSrₓFe_{1-y}Co_{y}O_{3-δ},
avec 0,1 ≤ x ≤ 0,4, 0,1 ≤ y ≤ 0,6, 0 ≤ δ ≤ x/2 et Ln = La-Lu, où
c) la résistance de transition de départ à l'interface interconnecteur - couche de liaison en céramique est inférieure à R = 0,01 Ω cm².

7. Composite acier-céramique selon la revendication précédente 6, qui présente, en utilisation longue durée à des températures situées en dessous de 900°C à l'interface interconnecteur - couche de liaison en céramique, une couche de corrosion, qui est plus mince que 2 µm, en particulier plus mince que 1 µm.

8. Composite acier-céramique selon l'une des revendications précédentes 6 à 7, dans lequel la résistance de transition lors de l'utilisation en dessous de 850°C présente une modification de la résistance ΔR de moins de 0,005 Ω cm² pour 1000 heures de fonctionnement.

9. Composite acier-céramique selon l'une des revendications précédentes 6 à 8, dans lequel l'interconnecteur se compose d'un acier ferritique ayant de 18 à 24 % en poids de Cr et d'autres éléments d'alliage, en particulier Mn, avec respectivement moins de 2 % en poids.

10. Composite acier-céramique selon l'une des revendications précédentes 6 à 9, dans lequel la couche de liaison en céramique présente une composition selon la formule Ln₁₋ₓSrₓmn_{1-y}Co_{y}O_{3-δ} ou Ln₁₋ₓSrₓFe_{1-y}CO_{y}O_{3-δ},
avec 0, 1 ≤ x ≤ 0, 4, 0, 1 ≤ y ≤ 0, 6, 0 ≤ δ ≤ x/2 et Ln = La-Lu.

11. Utilisation d'un composite acier-céramique selon l'une des revendications 6 à 10 dans une pile à combustible à haute température.

12. Utilisation d'un composite acier-céramique selon la revendication 6 à 10 dans un empilement de piles à combustible à haute température.
